# EUROPEAN PATENT SPECIFICATION

(11) **EP 4 071 000 B1**
(45) Date of publication and mention of the grant of the patent: **05.11.2025**
(21) Application number: 21167035.1
(22) Date of filing: 06.04.2021
(51) Int. Cl.: B60R 16/02

(54) **DEVICE FOR EARTHING AND METHODS**
VORRICHTUNG ZUR ERDUNG UND VERFAHREN
DISPOSITIF DE MISE À LA TERRE ET PROCÉDÉS

(43) Date of publication of application: 12.10.2022
(73) Proprietor: J.S.T. MFG. Co., Ltd., Osaka-shi, Osaka 542-0081 (JP)
(72) Inventor: STROEYKENS, Erik, 3190 Boortmeerbeek (BE)
(74) Representative: D Young & Co LLP

(56) References cited:
- EP-A1- 3 693 227
- WO-A1-2012/057223
- SU-A1- 1 396 186

## Description

### BACKGROUND

### Field

The present disclosure relates to devices for providing an earthing point for electrical systems of motorised vehicles and methods for attaching devices for providing an earthing point for motorised vehicles.

### Description of Related Art

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior art against the present invention.

Modern motorised vehicles such as automobiles have an array of electrical systems, which can deliver a high performance for the vehicles. Modem vehicles not only require electrical systems for conventional lighting and for instrumentation, but often a motor of a motorised vehicle itself may have an engine management system, such as for example for an internal combustion engine. The engine may be an electrical engine driven by electrical motors. For all of these electrical systems, an earthing point is required and without the earthing point the electrical systems may not function or fail and so the vehicle as a whole is dependent on having a reliable earthing point.

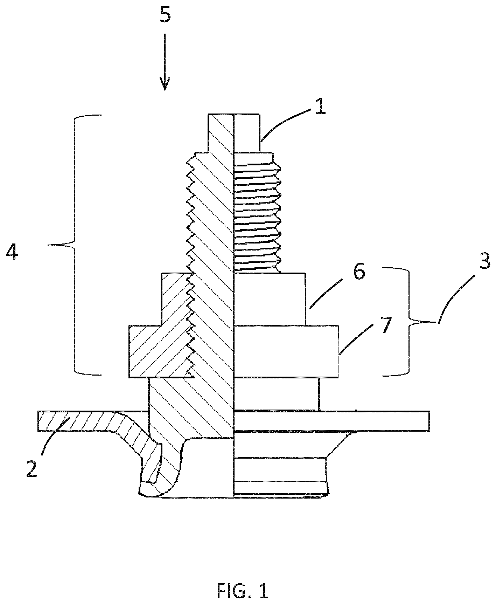

An earthing point is commonly achieved by attaching a device to a body of a vehicle typically an underside of the vehicle. Figure 1 provides an example of such an arrangement. As shown in Figure 1, an earthing point is provided using a device comprising a fixing bolt 1, which is either welded or riveted to a body 2 of a vehicle. The fixing bolt 1 is shown as a cut-away section 5. The electrical earthing point is provided by securing an earthing terminal (not shown) to the fixing bolt 1 using a nut 3. The nut 3 comprises a hexagonal section 6 which is configured to be rotated and a flange 7. The earthing terminal provides connection terminals for a plurality of electrical systems. Typically, such terminals are known as comb terminals because an electrical separation of each of the connections points for each electrical system has an appearance of a comb. The fixing bolt 1 to which the earthing terminal is attached conventionally includes a threaded section 4 to secure a nut 3 which is screwed onto the threaded section 4 before a coating or painting process is performed to keep electrical contact surfaces clean for later connection to the comb terminal.

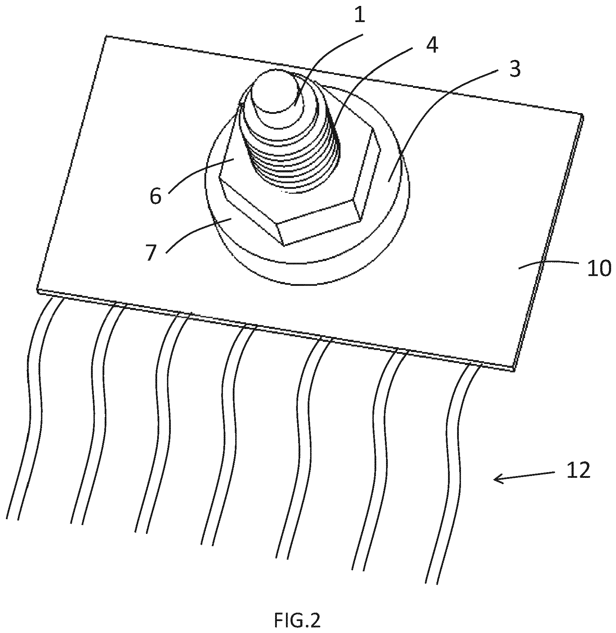

Figure 2 illustrates a deployment of the earthing point shown in Figure 1 in which the nut 3 is assembled with a comb terminal 10. The hexagonal section 6 of the nut 3 is rotated causing the nut 3 to move down the fixing bolt 1 towards the comb terminal 10 so that the flange 7 of the nut 3 presses the against the comb terminal 10, thereby securing the comb terminal 10 to the device. The comb terminal provides a plurality of connection points for earthing a plurality of electrical connectors 12.

As mentioned above, without an electrical earth, many electrical systems will not operate correctly. Therefore it will be appreciated that if the earthing point fails then the electrical systems of the vehicle will be compromised which can lead to a catastrophic failure. Therefore it is desirable to improve a reliability of both fixing and attaching an electrical earthing point to a vehicle and also improving an ease with which the electrical earthing point can be attached to a vehicle. SU 1396186 A1, published 15 May 1988, discloses a grounding assembly for electric units.

### SUMMARY

The present disclosure can help address or mitigate at least some of the issues discussed above.

Embodiments can provide a device for providing an earthing point of a motorised vehicle. The device includes a mounting section configured to attach the device to the motorised vehicle and to provide, when attached to the motorised vehicle, an electrical earth for one or more electrical components of the motorised vehicle by connection to an earthing terminal. The device comprises a spindle extending from the mounting section along an axial length defining a rotation axis. The spindle includes a threaded section along at least part of the axial length. The device comprises a collapsible core and a cone configured to engage with the collapsible core. The cone includes a through hole which includes a thread and the through hole and the thread are configured mutually to engage with the threaded section of the spindle so that rotation of the cone about the rotation axis causes the cone to travel towards or away from the mounting section by a screwing action caused by engagement of the thread of the through hole with the threaded section of the spindle. The collapsible core includes a through section which allows the collapsible core to be mounted on the spindle and a deformable section which is biased in a collapsed state in which a clamping end of the collapsible core proximate the mounting section is in a retracted position. The deformable section is configured to transition to an expanded state by pressure of the cone engaging with the collapsible core caused by the screwing action as the cone is rotated about the rotation axis causing the cone to travel along the spindle towards the mounting section by the mutual engagement of the threaded section of the spindle and the thread of the through hole. The cone, the collapsible core and the spindle are configured to clamp an earthing terminal on the mounting section when the deformable section of the collapsible core is in the expanded state caused by the action of the cone being screwed on the spindle towards the mounting section and the clamping end of the deformable section in the expanded state forcing the earthing terminal against the mounting section from pressure from the screwing action. The spindle and the cone include a retaining means preventing the thread of the through hole of the cone disengaging with the threaded section of the spindle.

Respective aspects and features of the present disclosure are defined in the appended claims.

It is to be understood that both the foregoing general description and the following detailed description are exemplary, but are not restrictive, of the present technology. The described embodiments, together with further advantages, will be best understood by reference to the following detailed description taken in conjunction with the accompanying drawings.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings wherein like reference numerals designate identical or corresponding parts throughout the several views, and:
Figure 1 is a schematic representation of a device for providing an earthing point of a vehicle providing a cut-away sectional view;
Figure 2 is a schematic illustration of a device for providing an earthing point which uses the arrangement of Figure 1 and includes a comb terminal;
Figure 3 is a schematic representation of a device for providing an earthing point of a vehicle according to an example embodiment;
Figure 4A is a cut-away sectional view of a clamping segment of a collapsible core forming part of a device for providing an earthing point of a vehicle according to an example embodiment;
Figure 4B is a cut-away sectional view of a clamping segment of a collapsible core forming part of a device for providing an earthing point of a vehicle according to an example embodiment;
Figure 5 is a schematic representation of a device for providing an earthing point of a vehicle in a clamping state according to an example embodiment;
Figure 6 is a cut-away sectional view of a device for providing an earthing point of a vehicle in a clamping state according to an example embodiment;
Figure 7 is a cut-away sectional view of a device for providing an earthing point of a vehicle in an open state according to an example embodiment;
Figure 8 is a schematic representation and a cut-away sectional view of a device for providing an earthing point of a vehicle in an open state according to an example embodiment;
Figure 9 is a cut-away sectional view of a device for providing an earthing point of a vehicle in a clamping state according to an example embodiment;
Figure 10 is a schematic representation of a device for providing an earthing point of a vehicle in a clamping state according to an example embodiment.
Figure 11 is a flow diagram illustrating a method for securing a device to a body of a vehicle to provide an earthing connection according to example embodiments.

### DETAILED DESCRIPTION OF THE EMBODIMENTS

As explained above embodiments can provide improvements in devices, which provide an earthing point to vehicles. A problem with known devices for providing earthing points to vehicles manufactured by Original Equipment Manufacturers (OEM) is that, as explained above, typical arrangements include a threaded screw and nut. Such arrangements are prone to cross threading during assembly, in which the nut appears to the assembler to have engaged the bolt whereas in fact the thread on the nut has not aligned and engaged with the thread on the screw. This may appear to the assembler to have engaged, because a torque requirement has been met. However, if the nut and bolt have crossed threaded and not correctly mated the earthing point is likely to fail in service.

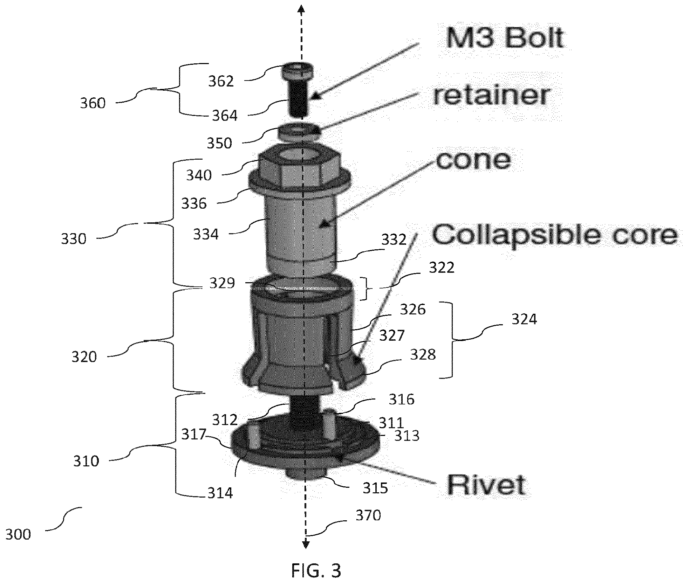

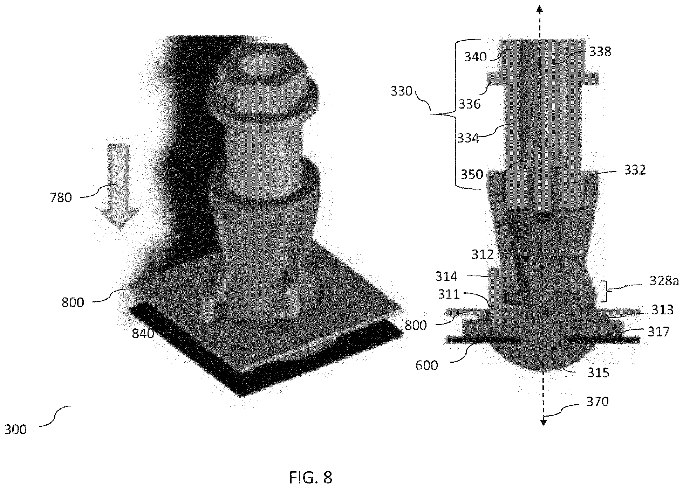

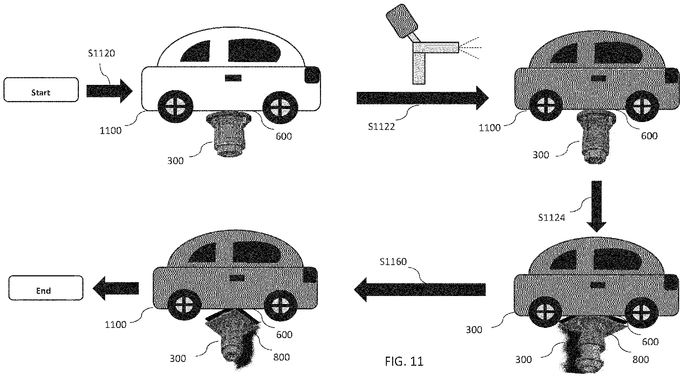

An example of a device for providing an earthing point according to an embodiment, which addresses this technical problem, is shown in Figure 3. As shown in Figure 3, a device 300 for providing an earthing point comprises a mounting section 310. The mounting section 310 is configured to attach the device 300 to a vehicle 1100 (not shown in Figure 3). The attaching may be achieved by either riveting or welding the mounting section 310 onto a body 600 of the vehicle 1100 (visible in Figure 11) or any other means as will be appreciated by one skilled in the art. The mounting section 310 is comprised of electrically conductive material and provides an electrical earth for one or more electrical components of the vehicle 1100 by connection to an earthing terminal 800 (visible in Figure 8). In this way, electrical current flowing through the earthing terminal 800 may flow to the body 600 of the vehicle 1100 via the mounting section 310, thereby providing an earthing point for the device 300.

In some example embodiments, the mounting section 310 comprises a base portion 317, one or more steps 313 extending from an upper surface of the base portion for clamping of the earthing terminal 800, and a platform 311 extending from the upper surface of the base portion 317, which has a greater height above the base portion 317 than the one or more steps 313.

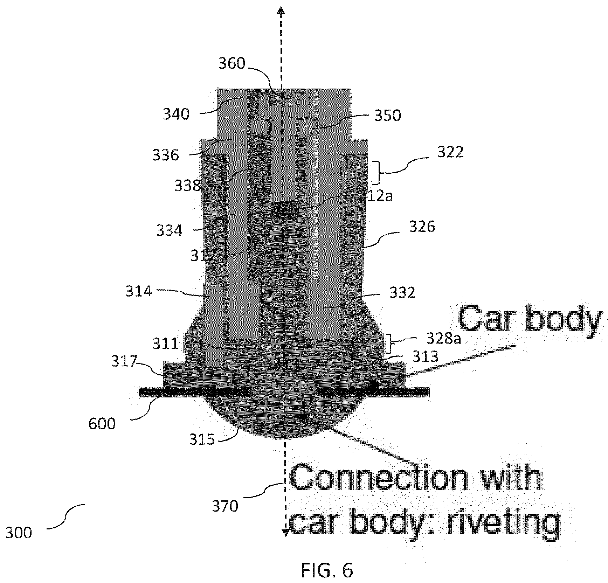

The base portion 317 may be configured to attach the mounting section 310 to the body 600 of the vehicle 1100. In some embodiments, the base portion 317 may be welded onto the body 600 of the vehicle 1100. In other embodiments, as shown in Figure 3, the mounting section 310 may comprise a head portion 315 which is configured in combination with the base portion 317 to provide a riveting connection to the body 600 of the vehicle 1100. Although the base portion 317 is shown as a disk in Figure 3, it will be appreciated that the base portion 317 may have any shape. In some embodiments, the head portion 315 extends from a lower surface of the base portion 317 and may form a hemisphere as shown in Figure 6, when it has been riveted to the vehicle 1100. According to one example configuration a diameter of the head portion 315 is less than a diameter of the base portion 317 to provide a riveting connection to the body 600 of the vehicle 1100.

The platform 311 may be a raised disk in a centre of the base portion 317. A height of the platform 311 above the base portion 317 is greater than a height of the steps 313 above the base portion 317. Although the platform 311 is shown as a disk in Figure 3, it will be appreciated that the platform 311 may have any cross-sectional shape.

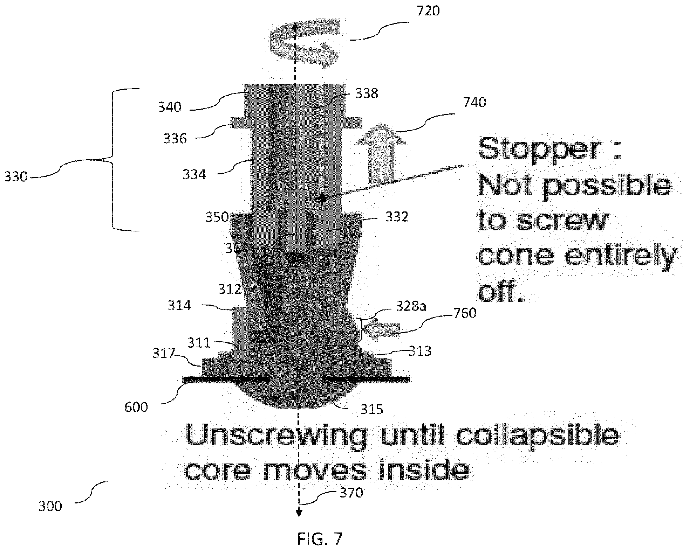

In Figure 3, the one or more steps 313 form a plurality of steps 313, which can be more easily seen in Figures 6 and 7. In such embodiments, the plurality of steps 313 may be positioned around an edge of the platform 311. In embodiments where the platform 311 is a raised disk, as shown in Figure 3, the plurality of steps 311 may be positioned around a circumference of the platform 311. In exemplary embodiments, a number of the steps 313 may be equal to a number of clamping segments of a deformable section 324 of a collapsible core 320 (as will be explained below). In such embodiments, a gap between each of the steps 313 around the edge of the platform 311 may be equal to a gap 327 between the clamping segments of the collapsible core 320. Such embodiments provide an arrangement allowing the clamping segments to clamp the earthing terminal to the steps 313.

In example embodiments, a spindle 312 extends from the mounting section along an axial length defining a rotation axis 370. The spindle includes a threaded section along at least part of the axial length. As shown in Figure 3, the device 300 comprises a collapsible core 320 which includes a through section 329 which allows the collapsible core 320 to be mounted on the spindle 312. In example embodiments, the collapsible core 320 rests on the mounting section 310 such that at least part of the spindle 312 is inside the through section 329 of the collapsible core 320. The device 300 comprises a cone 330 including a through hole 338 (visible in Figure 6) which includes a thread, and the thread and the through hole 338 are configured to mutually engage with the threaded section of the spindle 312 so that rotation of the cone 330 about the rotation axis 370 causes the cone 330 to travel towards or away from the mounting section 310 by a screwing action caused by engagement of the thread of the through hole 338 with the threaded section of the spindle 312. The engagement of the spindle 312 and the cone 330 is explained in more detail with reference to Figure 6 below.

The spindle 312 and the cone 330 include a retaining means preventing the thread of the through hole 338 of the cone 330 disengaging with the threaded section of the spindle 312. In example embodiments, the retaining means is provided by a stopper 350. As will be described in more detail below, the spindle 312 may comprise a hollow section 312a (visible in Figure 6) configured to receive and engage with a securing bolt 360 for securing the stopper 350 to the spindle 312.

In some embodiments, the device 300 may include one or more terminal positioning pegs 314 and/or one or more core positioning pegs 316. In Figure 3, one terminal positioning peg 314 and one core positioning peg 316 are shown. In particular, the terminal positioning peg 314 is mounted on an upper surface of the base portion 317 of the mounting section 310 and the core positioning peg 316 is mounted on the platform 311 of the mounting section 310. As explained below, the core positioning peg 316 is located in one of a plurality of gaps 327 between clamping segments of the collapsible core 320 and the terminal positioning peg 314 is located in a peg receiving gap 840 of an earthing terminal 800 (visible in Figure 8). The terminal positioning peg 314 is configured to prevent undesirable rotation of the earthing terminal 800 (not shown in Figure 3) while the device 300 is being transitioned from an open state to a clamping state as will be explained below. The core positioning peg 316 is configured to prevent undesirable rotation of the collapsible core 320 of the device 300 while the device 300 is being secured to the body 600 of the vehicle 1100. Details of how the terminal positioning peg 314 and the core positioning peg 316 engage with the earthing terminal 800 and the collapsible core 320 respectively to prevent undesirable rotation a are provided below.

As shown in Figure 3, the collapsible core 320 is configured to be mounted on the spindle 312. In the example embodiment shown in Figure 3, the collapsible core 320 is mounted on the spindle 312 by resting on the platform 311 of the mounting section 310. The collapsible core 320 may be comprised of electrically conductive or non-electrically conductive material. The collapsible core 320 comprises a deformable section 324. In example embodiments, the collapsible core may additionally comprise a rigid receiving section 322 as shown in Figure 3. In Figure 3, the rigid receiving section 322 is shown as a substantially annular element, although it will be appreciated that any cross sectional shape may be used for the rigid receiving section 322. The rigid receiving section 322 defines a diameter of a through section 329 for receiving the cone 330. In such embodiments, the diameter of the through section 329 defined by the rigid receiving section 322 is at least as large as a diameter of a body 334 of the cone 330.

The deformable section 324 of the collapsible core 320 is biased in a collapsed state in which a clamping end of the collapsible core 320 proximate the mounting section is in a retracted position. The deformable section 320 is configured to transition to an expanded state by pressure of the cone 330 engaging with the collapsible core 320 caused by the screwing action as the cone 330 is rotated about the rotation axis 370 causing the cone 330 to travel along the spindle 312 towards the mounting section 310 by the mutual engagement of the threaded section of the spindle 312 and the thread of the through hole 338. As will be explained below, the deformable section 324 of the collapsible core 320 is in the expanded state when the device 300 is in the clamping state. Similarly, the deformable section 324 of the collapsible core 320 is in the collapsed state when the device 300 is in the open state.

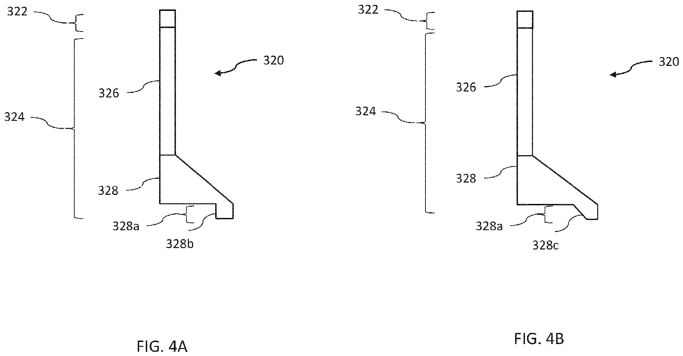

In example embodiments, the deformable section 324 may comprise one or more clamping segments each having a leg 326 and a foot 328, which form a clamping end of the deformable section 324 of the collapsible core 320. In particular, each leg 326 may be attached to the rigid receiving section 322 at one end and the foot 328 is attached to the other end of the leg 326. Each foot 329 may comprise a clamping ridge (explained in Figures 4A and 4B) for clamping the electrical terminal 800 to the mounting section 310.

Each of the clamping segments are biased in the collapsed state. In other words, pressure must be provided to the clamping segments of the collapsible core 320 to move the clamping segments away from the rotation axis 370. The collapsed state is exemplarily shown in Figures 7 and 8. As will be appreciated from Figures 7 and 8, the legs 326 are attached to the rigid receiving section 322 at one end, and the feet 328 on the other end of the legs 326 are in a retracted position when the deformable section 324 is in the collapsed state. The collapsed state of the deformable section 324 is exemplarily shown in Figures 7 and 8 when the device 300 is in the open state.

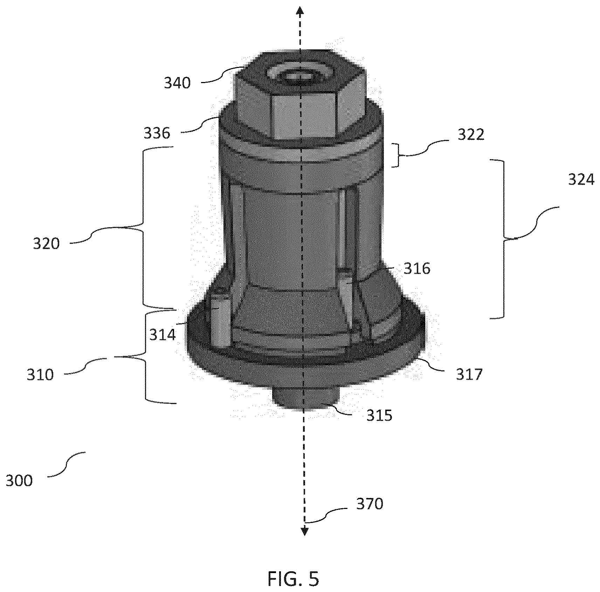

In accordance with exemplary embodiments, the deformable section 324 is configured to transition from the collapsed state to an expanded state by pressure of the cone 330 engaging with the collapsible core 320 caused by the screwing action as the cone 330 is rotated about the rotation axis 370 causing the cone 330 to travel along the spindle 312 towards the mounting section 310 by the mutual engagement of the threaded section of the spindle 312 and the thread of the through hole 338. In other words, the cone 330 provides pressure to the clamping segments to move the clamping segments away from the rotations axis 370. The expanded state of the deformable section 324 is exemplarily shown in Figure 5 and 6 when the device 300 is in the clamping state.

In the example embodiment shown in Figure 3, the deformable section 324 comprises a plurality of clamping segments, each having a leg 326 and a foot 328, with a plurality of gaps 327 existing between the plurality of clamping segments. As explained above, the foot 328 may be regarded as a clamping end of the deformable section 324 of the collapsible core 320. At least one of the gaps 317 may be configured to receive a core positioning peg 316. In some embodiments, the deformable section 324 may comprise only one clamping segment having one leg and one foot. In such embodiments, there are no gaps 327 and the core positioning pegs 316 and the terminal positioning pegs 314 are not used.

Figure 4A and 4B are cut-away sections each representing a different form of clamping segment of the deformable section 324 of the collapsible core 320 according to example embodiments. Specifically, Figures 4A and 4B represent a rigid receiving section 322 and deformable section 324 of the collapsible core 320 with a leg 326 of a clamping segment attached to the rigid receiving section 322 at one end. A foot 328 attached to the other end the leg 326 comprises a clamping ridge 328a. The clamping ridge 328a is configured to clamp an earthing terminal 800 (visible in Figure 8) against the one or more steps 313 of the mounting section 310 to provide an earthing point for the device 300. In Figures 4A and 4B, the clamping ridge 328a comprises an engagement edge 328b, 328c configured to engage with a step 313 of the mounting section 310 during clamping (to be explained below). The engagement edge 328b, 328c is an edge of the clamping ridge 328a proximate the rotation axis 370. In Figure 4A, the engagement edge 328b is substantially parallel to the leg 326. In other words, an angle formed between the engagement edge 328a and the leg 326 is approximately zero degrees. In Figure 4b, the engagement edge 328c is angled with respect to the leg 326. In particular, the engagement edge 328c forms an acute angle with the leg 326. In other words, an angle formed between the engagement edge 328c and the leg 326 is between zero and 90 degrees. In one example embodiment, the angle formed between the engagement edge 328c and the leg 326 is approximately 45 degrees. If an acute angle is formed between the engagement edge 328c and the leg 326 as explained with reference to Figure 4b, then the clamping ridge 328a encounters less resistance to collapse, thereby allowing the collapsible core 320 to more easily collapse compared to the arrangement illustrated in Figure 4A.

For example, the device 300 may be initially be in a clamping state. In the clamping state, the clamping ridges 328a are either resting on the steps 313 of the mounting section 310 or are clamping the electrical terminal 800 to the steps 313 of the mounting section 310 if the electrical terminal 800 has been mounted on the device 300. In the clamping state, the pressure provided by the cone 330 to the clamping segments of the collapsible core 320 moves the clamping segments away from the rotation axis 370. The device 300 may subsequently be transitioned from the clamping state to the open state by rotating the cone 330 about the rotation axis 370 to travel along the spindle 312 away from the mounting section 310 caused by the mutual engagement of the threaded section of the spindle 312 and the thread of the through hole 338.

As the cone 330 travels along the spindle 312 away from the mounting section 310, an edge 319 of the platform 311 may act to block the clamping ridges 328a from moving closer to the rotation axis 370. In particular, the edge 319 of the platform 311 may provide a reaction force configured to oppose the movement of the clamping segments towards the rotation axis 370. As will be appreciated, a contact area between the edge 319 of the platform 311 and the engagement edge 328b, 328c is reduced if an engagement edge 328c which forms an acute angle with the leg 326 is used compared with an engagement edge 328b which is substantially parallel to the leg 326 is used. Consequently, the engagement edge 328c which forms an acute angle with the leg 326 is configured to provide a lower resistance to collapse of the deformable section 324 than the engagement edge 328b which is substantially parallel to the leg 326. Accordingly, when the device 300 is in the clamping state, the deformable section 324 is in the expanded state and when the device is in the open state, the deformable section is in the collapsed state.

In some embodiments, as shown in Figure 3, the cone 330 may comprise, at one end, a profiled cross-section which may be hexagonal or any geometric profile which allows the cone to be more easily rotated by a spanner or similar tool. The profiled section will be referred to as a nut 340 although this may be integrally formed with the cone 330. The cone 330 may comprise the nut 340, a resting disk 336, a body 334 and an engagement section 322. The resting disk 336 may be an annular disk between the nut 340 and the body 334 configured to rest on the rigid receiving section 322 of the collapsible core 320. The resting disk 336 prevents the collapsible core 320 from being dismounted from the spindle 312. It will be appreciated that any cross sectional shape for the resting disk 336 could be used. The nut 340 may be a conventional nut on an upper surface of the resting disk 336 configured to be rotated by any conventional means (such as by using a spanner or a wrench) to provide a torque for rotating the cone 330 on the spindle 312. The body 334 may extend from a lower surface of the resting disk 336. The body 334 may have a diameter, which is less than a diameter of the resting desk 336. The diameter of the body 334 is less than or equal to a diameter of the through section 329 defined by the rigid receiving section 322 of the collapsible core 320.

The engagement section 332 extends from an inner surface of the body 334 of the cone 330 towards the spindle 312. In one example, the thread included in the through hole 338 of the cone 330 is a threaded surface of the engagement section 332 which faces the spindle 312. Such an arrangement allows for the cone 330 to engage with the spindle 312, and to be screwed on the spindle 312 when a torque is applied to the nut 340.

As explained above, the spindle 312 and the cone 330 include a retaining means preventing the thread of the through hole 338 of the cone 330 disengaging with the threaded section of the spindle 312. In one example, as shown in Figure 3, the device 300 comprises a stopper 350 which is configured prevent the cone 330 from being dismounted from the spindle 312. In other words, the stopper 350 blocks the engagement section 332 of the cone 330 from moving past the stopper 350 if the cone 330 is screwed on the spindle 312 away from the mounting section 310 such that the engagement section 332 reaches the stopper 350.

In one example, the retaining means may include a securing bolt 360 with a head portion 362 and a shaft portion 364 configured to secure the stopper 350 to the spindle 312. The shaft portion 364 may have a threaded section configured to engage with a thread on an inner surface of hollow section 312a of the spindle 312. A diameter of the hollow section 312a is at least as large as a diameter of the shaft portion 364. The securing bolt 362 is configured to travel along the rotation axis 370 inside the hollow section 312a of the spindle 312 by rotating the head portion 362 of the securing bolt 362 by any conventional means (such as by using a screw driver for example). By securing the stopper 350 to the spindle 312, the cone 330 is prevented from disengaging with the spindle 312 and a likelihood of cross threading is therefore reduced, if the cone 330 had to be mounted on the spindle 312 with the collapsible core 320 during a process of attaching the earthing terminal to a vehicle during assembly of the vehicle. The stopper 350 therefore prevents the cone 330 from being removed from the spindle and the device 300 is configured so that an earthing terminal can be secured without a need for the cone 330 to be unscrewed from the spindle 312.

Figure 5 shows a schematic representation of the device 300 in a clamping state. In Figure 5, the cone 330 is approximately fully screwed into the collapsible core 320 but no earthing terminal is being clamped between the collapsible core 320 and the steps 313 of the mounting section 310. It is advantageous to arrange for the device 300 to be in a clamping state before mounting the device 300 onto the vehicle 1100 and painting a body 600 of the vehicle 1100 along with the device 300 as will be explained in more detail below.

Figure 6 illustrates a cut-away section of the device 300 in the clamping state. **In** Figure 6, the earthing terminal 800 is not mounted onto the device 300 but the device 300 has been mounted onto a body 600 of the vehicle **1100.** As shown in Figure 6, the head portion 315 and the base portion 317 of the mounting section 310 may be configured in combination to provide a riveting connection to the body 600 of the vehicle 1100.

As illustrated in Figure 6, the body 334 of the cone 330 may comprise an engagement section 332. The engagement section 332 extends from an inner surface of the body 334 of the cone 330 towards the spindle 312 as shown in Figure 6. A surface of the engagement section 332 facing the spindle 312 may have a threaded section configured to engage the threads on the spindle 312. The threaded section on the surface of the engagement section 332 facing the spindle 312 is an example of the thread included in the through hole 338 of the cone 330. Therefore the engagement section 332 enables the cone 330 to travel along the rotation axis 370. **In** particular, the engagement section 332 enables the cone 330 to be screwed on the spindle 312 by rotation of the nut 340.

As shown in Figure 6, the stopper 350 rests on the spindle 312 and is configured to block the engagement section 332 if the cone 330 is screwed on the spindle 312 away from the mounting section 310 such that the engagement section 332 reaches the stopper 350. **In** other words, the stopper 350 prevents the cone 330 from being completely unscrewed from the spindle 312. Therefore a likelihood of the cone 330 dismounting from the spindle 312 when the vehicle is in motion is reduced, and a likelihood of cross threading is consequently reduced.

When the device 300 is in the clamping state , the deformable section 324 of the collapsible core 320 is in the expanded state as explained above. The device 300 may be transitioned from the open state to the clamping state by rotating the cone 330 along the rotation axis 370 to travel along the spindle 312 towards the mounting section 310 caused by the screwing action by the mutual engagement of the threaded section of the spindle 312 and the thread of the through hole 338. The engagement of the cone 330 with the collapsible core 320 caused by the screwing action provides pressure to the clamping segments to push the clamping segments away from the rotation axis 370. As the clamping segments are pushed away from the rotation axis 370 by the cone 300, the clamping ridges 328a of the clamping segments move beyond the edge 319 of the platform 311 and press against the steps 313 of the mounting section 310.

A contact interface between the steps 313 of the mounting section 313 and the clamping ridges 328a (not visible) may be regarded as an electrical contact interface for an earthing terminal 800. When the device 300 is in the clamping state and the earthing terminal 800 is not mounted onto the device 300, the electrical contact interface is covered because the clamping ridge 328a moves beyond the edge 319 of the platform 311 of the mounting section 310 and presses against the steps 313 of the mounting section 310. It is advantageous to keep the electrical contact interface covered before the device 300 is painted as will be explained below.

**In** the example shown in Figure 6, the clamping ridge 328a has an engagement edge 328b which is substantially parallel to the leg 326 of the clamping segment. It will be appreciated that the clamping ridge 328a may alternatively have an engagement edge 328b which forms an acute angle with the leg 326 of the clamping segment.

While the device 300 is in the clamping state, the device 300 may be mounted onto the body 600 of the vehicle 1100. When the device 300 is mounted onto the body 600 of the vehicle 1100, the vehicle 1100 may undergo a painting or coating procedure in which both the body 600 of the vehicle **1100** and the device 300 are painted (as explained with reference to Figure 11 below). For example, the device 300 may be spray painted whilst it is mounted onto the body 600 of the vehicle 1100. Such painting procedures ensure that surfaces of the device 300 remain clean. By painting the device 300 when it is in the clamping state and mounted onto the body 600 of the vehicle, and the earthing terminal 800 is not mounted onto the device, exposed surfaces of the device 300 may be painted to assist in keeping those surfaces clean. This procedure is more efficient than, for example, painting the exposed surfaces when the device 300 is disassembled. As explained above, the electrical contact interface is covered when the device 300 is in the clamping state, thereby preventing paint from undesirably contaminating the electrical contact interface during painting. If paint contaminated the electrical contact interface then this may result in a reduced effectiveness of the steps 313 of the mounting section 310 in conducting electricity to the body 600 of the vehicle 1100.

Figure 7 illustrates an example of the device 300 in an open state. The device 300 may be transitioned from a clamping state to the open state after the painting procedure has been completed for example. When the device 300 is in the open state, the deformable section 324 is in the collapsed state, and the device 300 is configured to receive the earthing terminal 800 for one or more electrical components of the motorised vehicle.

As shown by arrow 720 in Figure 7, the cone 330 is configured to be screwed on the spindle 312 by a screwing action causing the cone 330 to rotate about the rotation axis 370. The cone 330 may be rotated by applying a torque 720 to the nut 340 of the cone 330 which causes the cone 330 to travel away from the mounting section 310, as shown by arrow 740. until the engagement section 332 of the cone 330 is blocked by the stopper 350. The stopper 350 prevents the cone 330 from moving any further upwards even if a further torque is applied. In other words, as the cone 330 travels along the spindle away from the mounting section 310, an area of contact between an outer surface of the body 334 of the cone 330 and the clamping segments of the collapsible core 320 reduces. Therefore, pressure provided to the clamping segments by the cone 330 to move the clamping segments away from the rotation axis 370 decreases as the cone 330 is screwed on the rotation axis 370 away from the mounting section 310. As the pressure provided by the cone 330 reduces, the clamping segments move towards the rotation axis 370 as shown by arrow 760 because the deformable section 324 is biased in the collapsed state. As the clamping segments move towards the rotation axis 370, the clamping ridge 328a of the clamping segments move over the edge 319 of the platform 311 and rest on the platform 311.

Figure 8 illustrates an example arrangement of the device 300 in the open state when an earthing terminal is mounted on the device 300. The earthing terminal 800 may be a comb terminal as shown in Figure 2 for example. As such, the earthing terminal 800 provide one or more electrical connections to be earthed. The one or more electrical connections to be earthed may originate from respective electrical systems in the vehicle. In other words, electricity flows from electrical systems in the vehicle to the earthing terminal 800. The earthing terminal 800 may be planar although it will be appreciated that the terminal need not necessarily be planar. The earthing terminal 800 may include a hole for enabling the earthing terminal to be slotted over the device 300 and mounted onto the steps 313 of the mounting section 310 as shown by arrow 780.

In order for the device 300 to provide an earthing point for the earthing terminal 300, electricity flowing through the earthing terminal 800 must have a path to the body 600 of the vehicle 1100. In Figure 8, the earthing terminal 800 rests on the steps 313 of the mounting section 310. As the mounting section 310 comprises electrically conductive material, the steps 313 provide a path for electricity to flow from the earthing terminal through the steps 313 and on to the body 600 of the vehicle.

In some embodiments, as illustrated in Figure 8, the earthing terminal 800 may comprise one or more peg receiving gaps 840. The one or more peg receiving gaps 840 are configured to receive the one or more terminal positioning pegs 314 which prevent rotation of the earthing terminal 800.

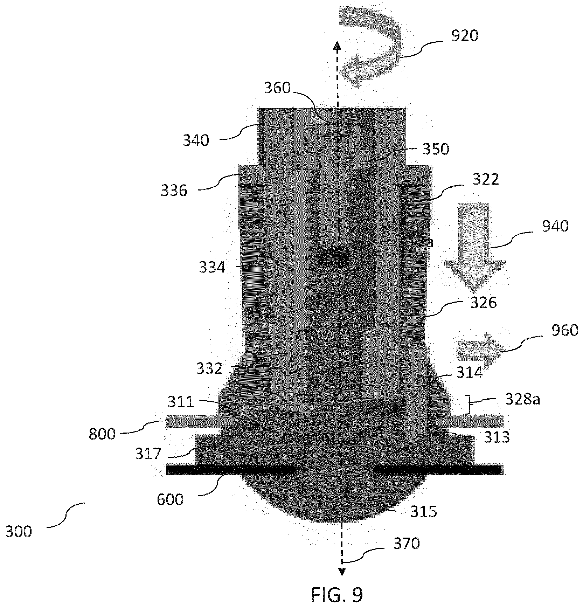

Figure 9 illustrates an example arrangement of the device 300 in a clamping state. In Figure 9, the earthing terminal 800 is mounted onto device 300. As shown by arrow 920, the cone 330 is configured to be screwed on the spindle 312 when the cone 330 is mounted on the spindle 312. The cone 330 may be rotated about the spindle 312 by applying a torque 920 to the nut 340 of the cone 330 which causes the cone 330 to move along the rotation axis 370 towards the mounting section 310, as shown by arrow 940, until the engagement section 332 of the cone 330 contacts the platform 311. In other words, as the cone 330 moves along the rotation axis 370 towards the platform 311 of the mounting section 310, an area of contact between an outer surface of the body 334 of the cone 330 and the clamping segments of the collapsible core 320 increases. Therefore, the pressure of the cone 330 engaging with the clamping segments of the collapsible core 320 caused by the screwing action as the cone 330 is rotated about the rotation axis 370 causing the cone 330 to travel along the spindle 312 towards the mounting section 310 by the mutual engagement of the threaded section of the spindle 312 and the thread of the through hole 338, increases as the cone 330 is moved along the rotation axis 370 towards the mounting section 310. As the pressure provided by the cone 330 increases, the cone 330 pushes the clamping segments from the rotation axis 370, as shown by arrow 960, such that the clamping ridge 328a of the clamping segments move beyond the edge 319 of the platform 311 and clamps the earthing terminal 800 to the steps 313 of the mounting section 310. Such an arrangement securely fixes the earthing terminal 800 to the mounting section 310, thereby providing a earthing point for a motorised vehicle.

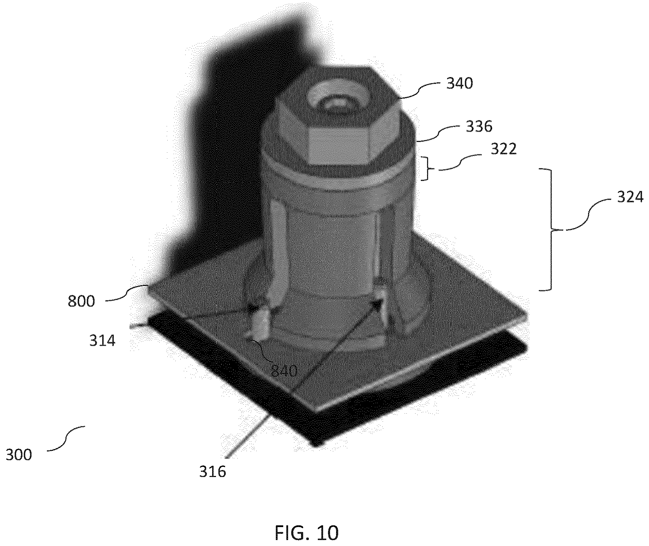

Figure 10 illustrates an example arrangement of the device 300 in the clamping state. In Figure 10, the earthing terminal 800 is mounted onto device 300. As explained above, the device 300 may include one or more terminal positioning pegs 314 and/or one or more core positioning pegs 316 in some embodiments. In Figure 10, optionally, the device 300 includes one terminal positioning peg 314 and one core positioning pegs 316. The core positioning peg 316 is mounted on the platform 311 of the mounting section 310 and the terminal positioning peg 314 is mounted on the base portion 317 of the mounting section 310. The core positioning peg 316 is configured to be received by one of the gaps 327 separating the clamping segments of the deformable section 324 of the collapsible core 320. The terminal positioning peg 314 is configured to be received by a peg-receiving gap 840 in the earthing terminal 800. Consequently, when the cone 330 is rotated, the core positioning peg 316 is configured to prevent undesirable rotation of the collapsible core 320 and the terminal positioning peg 314 is configured to prevent undesirable rotation of the earthing terminal 800.

It will be appreciated that the present disclosure is not limited to preventing undesirable rotation of the collapsible core and/or terminal by the use of pegs as described.

Figure 11 is a part schematic part flow diagram illustrating a method for securing the device 300 according to the example embodiments described above to a motorised vehicle 1100 to provide an earthing connection according to example embodiments (not shown to scale).

At step S1120, the mounting section 310 is attached to the vehicle 1100. For example, the base section 317 of the mounting section 310 may be welded to a body 600 of the vehicle 1100 or the base portion may be configured in combination with a head portion 315 of the mounting section 310 to rivet the mounting section 310 to the body 600 of the vehicle. As shown in Figure 11, the device 300 may be attached to an underside of the vehicle 1100, although it will be appreciated that the device 300 may attached anywhere on the vehicle 1100. In some embodiments, the mounting section 310 is attached to the body 600 of the vehicle 1100 when the device 300 is in a clamping state as explained with reference to Figures 5 and 6 above.

In step S1122, the vehicle is coated whilst the device 300 is in the clamping state. For example, the body 600 of the vehicle 1100 and the device 300 may be coated with paint by spray painting. Painting the body 600 of the vehicle 1100 and the device 300 can enable exposed surfaces to remain clean. Painting the body 600 of the vehicle 1100 and the device 300 together allows for efficient painting. In addition, as the device 300 is in the clamping state, an electrical contact interface between the at least one step 313 of the mounting section 310 and the clamping segment of the collapsible core 320 is covered, meaning that paint is unlikely to contaminate the electrical contact interface during painting.

In step S1124, after the coating procedure has been completed, the device 300 may be transitioned from the clamping state to the open state by rotating the cone 330 about the rotation axis 370 to cause the cone 330 to travel away from the mounting section 310 by the mutual engagement of the threaded section of the spindle 312 and the threaded section of the through hole 338 to transition the deformable section 324 from the expanded state to the collapsed state. Therefore, the uncontaminated electrical contact interface is uncovered, allowing for the earthing terminal 800 to be mounted onto the at least one step 313 of the mounting section 310. The earthing terminal 800 is then mounted on the mounting section 310. The earthing terminal is mounted on device 300 when the device 300 is in the open state and the deformable section 324 is consequently in the collapsed state. In some embodiments, the earthing terminal 800 may be mounted onto the at least one step 313 of the mounting section 310. The earthing terminal 800 may include a hole to enable it to be slotted over the device 300 and onto the at least one step 313 of the mounting section 310. In some embodiments, the earthing terminal 800 is a comb terminal.

In step S1160, the device 300 is transitioned to the clamping state by rotating the cone 330 about the rotation axis 370 to cause the cone 330 to travel towards the mounting section 310 by the mutual engagement of the threaded section of the spindle 312 and the threaded section of the through hole 338 to clamp the earthing terminal 800 on the mounting section 310 when the deformable section 324 is in the expanded state.

It will be appreciated from Figure 11 that the cone 330 and the collapsible core 320 remain mounted on the spindle 312 during the method described with respect to steps S1120, S1122, S1124 and S1160. Consequently, the cone 330 is never completely disengaged from the spindle 312. For conventional coating procedures using conventional devices, such as the device described in Figure 1, the nut 3 is required to be completely removed from the fixing bolt 1 before an electrical terminal may be mounted on the device. When the nut 3 is re-engaged with the fixing bolt 1 in order to clamp the electrical terminal to the device, cross threading becomes a possibility. Therefore the method described in Figure 11 with respect to steps S1120, S1122, S1124 and S1160 reduces a likelihood of cross threading.

Various further aspects and features of the present technique are defined in the appended claims.

As will be appreciated the planar or comb terminal may be made from a conducting material. The dimensions of the device for providing the earthing point may be a compromise between minimising a space occupied the earthing device on the vehicle body, whilst being large enough for the device to be installed by hand.

Further particular and preferred aspects of the present invention are set out in the accompanying independent and dependent claims. It will be appreciated that features of the dependent claims may be combined with features of the independent claims in combinations other than those explicitly set out in the claims.

Thus, the foregoing discussion discloses and describes merely exemplary embodiments of the present invention. As will be understood by those skilled in the art, the present invention may be embodied in other specific forms without departing from the scope of the invention as defined in the following set of claims.

Accordingly, the disclosure of the present invention is intended to be illustrative, but not limiting of the scope of the invention, as defined in the following set of claims. The disclosure, including any readily discernible variants of the teachings herein, define, in part, the scope of the foregoing claim terminology such that no inventive subject matter is dedicated to the public.

For ease of reference the following provides a summary of the reference numerals used for each of the parts shown in the drawings:
1. Fixing Bolt
2. Vehicle Body
3. Nut
4. Threaded Section
5. Cut-away Section
6. Hexagonal Section
7. Flange
10. Comb Terminal
12. Electrical Connectors
300. Earthing Device
310. Mounting Section
311. Platform
312. Spindle
312a. Hollow Section of Spindle
313. Steps
314. Terminal Positioning Peg
315. Head Portion of Mounting Section
316. Core Positioning Peg
317. Base Portion
319. Edge of Platform
320. Collapsible Core
322. Rigid Receiving Section
324. Deformable section
326. Leg
327. Gap
328. Foot
328a. Clamping Ridge
328b. Engagement Edge
328c. Engagement Edge
329. Through Section of Collapsible Core
330. Cone
332. Engagement Section
334. Body of Cone
336. Resting Disk
338. Through Hole of the Cone
340. Nut
350. Stopper
360. Securing Bolt
362. Head Portion of Securing Bolt
364. Shaft Portion of Securing Bolt
370. Rotation Axis
600. Vehicle Body
800. Electrical Terminal
840. Peg Receiving Gap
1100. Motorised Vehicle

## Claims

1. A device (300) for providing an earthing point of a motorised vehicle (1100), the device comprising
a mounting section (310) configured to attach the device to the motorised vehicle and to provide, when attached to the motorised vehicle, an electrical earth for one or more electrical components of the motorised vehicle by connection to an earthing terminal,
a spindle (312) extending from the mounting section along an axial length defining a rotation axis (370), the spindle including a threaded section along at least part of the axial length,
a collapsible core (320);
a cone (330) configured to engage with the collapsible core, the cone including a through hole (338) which includes a thread and the through hole and the thread are configured mutually to engage with the threaded section of the spindle so that rotation of the cone about the rotation axis causes the cone to travel towards or away from the mounting section by a screwing action caused by engagement of the thread of the through hole with the threaded section of the spindle, and the collapsible core includes a through section (329) which allows the collapsible core to be mounted on the spindle and a deformable section (324) which is biased in a collapsed state in which a clamping end of the collapsible core proximate the mounting section is in a retracted position and the deformable section is configured to transition to an expanded state by pressure of the cone engaging with the collapsible core caused by the screwing action as the cone is rotated about the rotation axis causing the cone to travel along the spindle towards the mounting section by the mutual engagement of the threaded section of the spindle and the thread of the through hole, the cone, the collapsible core and the spindle being configured to clamp an earthing terminal (800) on the mounting section when the deformable section of the collapsible core is in the expanded state caused by the action of the cone being screwed on the spindle towards the mounting section and the clamping end of the deformable section in the expanded state forcing the earthing terminal against the mounting section from pressure from the screwing action, wherein the spindle and the cone include a retaining means preventing the thread of the through hole of the cone disengaging with the threaded section of the spindle.

2. A device according to claim 1, comprising
the earthing terminal including a hole allowing the earthing terminal to be mounted on the mounting section of the device when the deformable section is in the collapsed state.

3. A device according to claim 2, wherein the electrical terminal is a comb terminal.

4. A device according to claim 1, wherein the cone includes an engagement section (332) extending from an inner surface of the cone towards the spindle and the thread included in the through hole of the cone is a threaded surface of the engagement section which faces the spindle, wherein the retaining means included in the spindle and the cone prevents the thread of the through hole of the cone disengaging with the threaded section of the spindle by blocking the engagement section of the cone from moving past the retaining means if the cone is screwed on the spindle away from the mounting section such that the engagement section reaches the retaining means.

5. A device according to claim 4, wherein the spindle includes a hollow section (321a) configured to receive a bolt which secures a stopper to the spindle, and the stopper provides the retaining means by blocking the engagement section of the cone from moving past the stopper if the cone is screwed on the spindle away from the mounting section such that the engagement section reaches the stopper.

6. A device according to claim 1, wherein the collapsible core includes a rigid receiving section (322) which defines a diameter of the through section which allows the collapsible core to be mounted on the mounting section, and the deformable section comprises at least one clamping segment including a leg (326) attached to the rigid receiving section at one end and a foot (328) attached to the other end of the leg comprising a clamping ridge (328a), the foot being the clamping end of the deformable section, and the clamping ridge being closer to the spindle when the deformable section is in the collapsed state compared with when the collapsible core is in the expanded state.

7. A device according to claim 6, wherein the at least one clamping segment is one of a plurality of clamping segments of the deformable section, each including a leg attached to the rigid receiving section at one end and a foot attached to the other end of the leg comprising a clamping ridge, each of the plurality of clamping segments separated by a gap (327), each of the feet being the clamping end of the deformable section, and the clamping ridges each being closer to the spindle when the deformable section is in the collapsed state compared with when the collapsible core is in the expanded state.

8. A device according to claim 1, including at least one core positioning peg (316) located in one of the gaps separating the clamping segments to prevent rotation of the collapsible core when the cone is screwed on the spindle.

9. A device according to claim 1, comprising at least one terminal positioning peg (314) located in a peg receiving gap (840) of the earthing terminal to prevent rotation of the earthing terminal when the cone is screwed on the spindle.

10. A device according to claim 6, wherein the mounting section comprises a base portion (317) for attaching the mounting section to the motorised vehicle, at least one step (313) extending from an upper surface of the base portion on which the earthing terminal is to be clamped, a platform (311) extending from the upper surface of the base portion, the platform having a greater height above the base portion than the at least one step, wherein the clamping ridges are configured to clamp the earthing terminal to the at least one step of the mounting section when the deformable section is in the expanded state and the clamping ridges rest on the platform when the deformable section is in the collapsed state.

11. A device according to claim 1, wherein the base portion is configured to attach the mounting section to the body of the vehicle by welding the base portion to the body of the vehicle.

12. A device according to claim 1, wherein a head portion (315) of the mounting section extends from the lower surface of the base portion and the base portion is configured to attach the mounting section to the body of the motorised vehicle by using the base portion and the head portion to rivet the device to the vehicle.

13. A device according to claim 1, wherein the cone comprises a nut (340), and the cone is configured to be screwed on the spindle by applying a torque to the nut.

14. A device according to claim 6, wherein the clamping ridge comprises an edge proximal to the spindle which is substantially parallel with the leg.

15. A device according to claim 6, wherein the clamping ridge comprises an edge (328b, 328c) proximal to the spindle which is angled with respect to the leg to form an angle between 0 and 90 degrees.

16. A device according to claim 15, wherein the proximal edge (328b, 328c) of the clamping ridge forms an angle of approximately 45 degrees with the rotation axis.

17. A device according to any of claims 6, wherein the cone comprises a resting disk (336) which is configured to rest on the rigid receiving section of the collapsible core when the deformable section is in the expanded state.

18. A device according to claim 1, wherein the collapsible core comprises electrically conductive material.

19. A device according to claim 1, wherein the collapsible core comprises non-electrically conductive material.

20. A method for attaching a device (300) for providing an earthing point of a motorised vehicle (1100), the device comprising
a mounting section (310) configured to attach the device to the motorised vehicle and to provide, when attached to the motorised vehicle, an electrical earth for one or more electrical components of the motorised vehicle by connection to an earthing terminal,
a spindle (312) extending from the mounting section along an axial length defining a rotation axis (370), the spindle including a threaded section along at least part of the axial length,
a collapsible core (320);
a cone (330) configured to engage with the collapsible core, the cone including a through hole (338) which includes a thread and the through hole and the thread are configured mutually to engage with the threaded section of the spindle so that rotation of the cone about the rotation axis causes the cone to travel towards or away from the mounting section by a screwing action caused by engagement of the thread of the through hole with the threaded section of the spindle, and the collapsible core includes a through section (329) which allows the collapsible core to be mounted on the spindle and a deformable section (324) which is biased in a collapsed state in which a clamping end of the collapsible core proximate the mounting section is in a retracted position and the deformable section is configured to transition to an expanded state by pressure of the cone engaging with the collapsible core caused by the screwing action as the cone is rotated about the rotation axis causing the cone to travel along the spindle towards the mounting section by the mutual engagement of the threaded section of the spindle and the thread of the through hole, the cone, the collapsible core and the spindle being configured to clamp an earthing terminal (800) on the mounting section when the deformable section of the collapsible core is in the expanded state caused by the action of the cone being screwed on the spindle towards the mounting section and the clamping end of the deformable section in the expanded state forcing the earthing terminal against the mounting section from pressure from the screwing action, wherein the spindle and the cone include a retaining means preventing the thread of the through hole of the cone disengaging with the threaded section of the spindle, the method comprising
attaching the mounting section to the motorised vehicle;
mounting the earthing terminal on the mounting section when the deformable section is in the collapsed state;
rotating the cone about the rotation axis to cause the cone to travel towards the mounting section by the mutual engagement of the threaded section of the spindle and the threaded section of the through hole to clamp the earthing terminal on the mounting section when the deformable section is in the expanded state.

21. A method according to claim 20, wherein the attaching the mounting section to the motorised vehicle comprises
welding or riveting the mounting section to the vehicle;
coating the vehicle when the deformable section is in the expanded state;
rotating the cone about the rotation axis to cause the cone to travel away from the mounting section by the mutual engagement of the threaded section of the spindle and the threaded section of the through hole to transition the deformable section from the expanded state to the collapsed state.

## Patentansprüche

1. Vorrichtung (300) zum Bereitstellen eines Erdungspunkts eines motorisierten Fahrzeugs (1100), wobei die Vorrichtung Folgendes umfasst
einen Montageabschnitt (310), der dazu ausgelegt ist, die Vorrichtung an dem motorisierten Fahrzeug zu befestigen und bei Befestigung an dem motorisierten Fahrzeug eine elektrische Erdung für eine oder mehrere elektrische Komponenten des motorisierten Fahrzeugs durch Verbindung mit einem Erdungsanschluss bereitzustellen,
eine Spindel (312), die sich von dem Montageabschnitt entlang einer axialen Länge erstreckt, die eine Drehachse (370) definiert, wobei die Spindel einen Gewindeabschnitt entlang zumindest eines Teils der axialen Länge umfasst, einen zusammenklappbaren Kern (320);
einen Konus (330), der dazu ausgelegt ist, mit dem zusammenklappbaren Kern in Eingriff zu kommen, wobei der Konus ein Durchgangsloch (338) umfasst, das ein Gewinde umfasst, und das Durchgangsloch und das Gewinde dazu ausgelegt sind, gegenseitig mit dem Gewindeabschnitt der Spindel derart in Eingriff zu kommen, dass eine Drehung des Konus um die Drehachse bewirkt, dass sich der Konus durch eine durch den Eingriff des Gewindes des Durchgangslochs mit dem Gewindeabschnitt der Spindel bewirkte Schraubwirkung zu dem Montageabschnitt hin oder von diesem weg bewegt, und wobei der zusammenklappbare Kern einen Durchgangsabschnitt (329), der ermöglicht, dass der zusammenklappbare Kern auf der Spindel montiert wird, und einen verformbaren Abschnitt (324) umfasst, der in einen zusammengeklappten Zustand vorgespannt ist, in dem sich ein Klemmende des zusammenklappbaren Kerns in der Nähe des Montageabschnitts in einer zurückgezogenen Position befindet, und wobei der verformbare Abschnitt dazu ausgelegt ist, durch einen Druck des Eingriffs des Konus mit dem zusammenklappbaren Kern in einen expandierten Zustand überzugehen, der durch die Schraubwirkung bewirkt wird, wenn der Konus um die Drehachse gedreht wird, wodurch eine Bewegung des Konus entlang der Spindel zu dem Montageabschnitt hin durch den gegenseitigen Eingriff des Gewindeabschnitts der Spindel und des Gewindes des Durchgangslochs bewirkt wird, wobei der Konus, der zusammenklappbare Kern und die Spindel dazu ausgelegt sind, einen Erdungsanschluss (800) auf dem Montageabschnitt festzuklemmen, wenn sich der verformbare Abschnitt des zusammenklappbaren Kerns in dem expandierten Zustand befindet, der durch die Wirkung des Schraubens des Konus auf der Spindel zu dem Montageabschnitt hin bewirkt wird, und wobei das Klemmende des verformbaren Abschnitts in dem expandierten Zustand den Erdungsanschluss vonseiten eines Drucks aus der Schraubwirkung gegen den Montageabschnitt drückt, wobei die Spindel und der Konus ein Haltemittel aufweisen, das verhindert, dass das Gewinde des Durchgangslochs des Konus sich von dem Gewindeabschnitt der Spindel löst.

2. Vorrichtung nach Anspruch 1, umfassend dass der Erdungsanschluss ein Loch umfasst, das ermöglicht, dass der Erdungsanschluss auf dem Montageabschnitt der Vorrichtung montiert wird, wenn sich der verformbare Abschnitt in dem zusammengeklappten Zustand befindet.

3. Vorrichtung nach Anspruch 2, wobei der elektrische Anschluss ein Kammanschluss ist.

4. Vorrichtung nach Anspruch 1, wobei der Konus einen Eingriffsabschnitt (332) umfasst, der sich von einer Innenfläche des Konus zu der Spindel hin erstreckt, und wobei das in dem Durchgangsloch des Konus enthaltene Gewinde eine Gewindefläche des Eingriffsabschnitts ist, die der Spindel zugewandt ist, wobei das in der Spindel und dem Konus enthaltene Haltemittel verhindert, dass sich das Gewinde des Durchgangslochs des Konus von dem Gewindeabschnitt der Spindel löst, indem eine Bewegung des Eingriffsabschnitts des Konus an dem Haltemittel vorbei blockiert wird, wenn der Konus auf der Spindel von dem Montageabschnitt weg geschraubt wird, so dass der Eingriffsabschnitt das Haltemittel erreicht.

5. Vorrichtung nach Anspruch 4, wobei die Spindel einen hohlen Abschnitt (321a) umfasst, der dazu ausgelegt ist, einen Bolzen aufzunehmen, der einen Anschlag an der Spindel befestigt, und wobei der Anschlag das Haltemittel bereitstellt, indem eine Bewegung des Eingriffsabschnitts des Konus an dem Anschlag vorbei blockiert wird, wenn der Konus auf der Spindel von dem Montageabschnitt weg geschraubt wird, so dass der Eingriffsabschnitt den Anschlag erreicht.

6. Vorrichtung nach Anspruch 1, wobei der zusammenklappbare Kern einen starren Aufnahmeabschnitt (322) umfasst, der einen Durchmesser des Durchgangsabschnitts definiert, der ermöglicht, dass der zusammenklappbare Kern auf dem Montageabschnitt montiert wird, und wobei der verformbare Abschnitt mindestens ein Klemmsegment umfasst, das einen an einem Ende an dem starren Aufnahmeabschnitt befestigten Schenkel (326) und einen an dem anderen Ende des Schenkels befestigten Fuß (328) umfasst, der eine Klemmrippe (328a) umfasst, wobei der Fuß das Klemmende des verformbaren Abschnitts ist und sich die Klemmrippe näher an der Spindel befindet, wenn sich der verformbare Abschnitt in dem zusammengeklappten Zustand befindet, als wenn sich der zusammenklappbare Kern in dem expandierten Zustand befindet.

7. Vorrichtung nach Anspruch 6, wobei das mindestens eine Klemmsegment eines von mehreren Klemmsegmenten des verformbaren Abschnitts ist, die jeweils einen an einem Ende an dem starren Aufnahmeabschnitt befestigten Schenkel und einen an dem anderen Ende des Schenkels befestigten Fuß umfassen, der eine Klemmrippe umfasst, wobei jedes der mehreren Klemmsegmente durch einen Spalt (327) getrennt ist, wobei jeder der Füße das Klemmende des verformbaren Abschnitts ist und sich die Klemmrippen jeweils näher an der Spindel befinden, wenn sich der verformbare Abschnitt in dem zusammengeklappten Zustand befindet, als wenn sich der zusammenklappbare Kern in dem expandierten Zustand befindet.

8. Vorrichtung nach Anspruch 1, die mindestens einen Kernpositionierungszapfen (316) umfasst, der in einem der die Klemmsegmente trennenden Spalte angeordnet ist, um eine Drehung des zusammenklappbaren Kerns zu verhindern, wenn der Konus auf der Spindel geschraubt wird.

9. Vorrichtung nach Anspruch 1, die mindestens einen Anschlusspositionierungszapfen (314) umfasst, der in einem Zapfenaufnahmespalt (840) des Erdungsanschlusses angeordnet ist, um eine Drehung des Erdungsanschlusses zu verhindern, wenn der Konus auf der Spindel geschraubt wird.

10. Vorrichtung nach Anspruch 6, wobei der Montageabschnitt einen Basisteil (317) zum Befestigen des Montageabschnitts an dem motorisierten Fahrzeug umfasst, wobei sich mindestens eine Stufe (313) von einer oberen Fläche des Basisteils erstreckt, auf der der Erdungsanschluss festgeklemmt werden soll, wobei sich eine Plattform (311) von der oberen Fläche des Basisteils erstreckt, wobei die Plattform eine größere Höhe über dem Basisteil als die mindestens eine Stufe aufweist, wobei die Klemmrippen dazu ausgelegt sind, den Erdungsanschluss an der mindestens eine Stufe des Montageabschnitts festzuklemmen, wenn sich der verformbare Abschnitt in dem expandierten Zustand befindet, und wobei die Klemmrippen auf der Plattform aufliegen, wenn sich der verformbare Abschnitt in dem zusammengeklappten Zustand befindet.

11. Vorrichtung nach Anspruch 1, wobei der Basisteil dazu ausgelegt ist, den Montageabschnitt durch Schweißen des Basisteils an die Karosserie des Fahrzeugs an der Karosserie des Fahrzeugs zu befestigen.

12. Vorrichtung nach Anspruch 1, wobei sich ein Kopfteil (315) des Montageabschnitts von der unteren Fläche des Basisteils erstreckt und der Basisteil dazu ausgelegt ist, den Montageabschnitt unter Verwendung des Basisteils und des Kopfteils zum Nieten der Vorrichtung an das Fahrzeug an der Karosserie des motorisierten Fahrzeugs zu befestigen.

13. Vorrichtung nach Anspruch 1, wobei der Konus eine Mutter (340) umfasst und der Konus dazu ausgelegt ist, durch Aufbringen eines Drehmoments auf die Mutter auf der Spindel geschraubt zu werden.

14. Vorrichtung nach Anspruch 6, wobei die Klemmrippe eine Kante proximal zu der Spindel umfasst, die im Wesentlichen parallel zu dem Schenkel ist.

15. Vorrichtung nach Anspruch 6, wobei die Klemmrippe eine Kante (328b, 328c) proximal zu der Spindel umfasst, die in Bezug auf den Schenkel so abgewinkelt ist, dass sie einen Winkel zwischen 0 und 90 Grad bildet.

16. Vorrichtung nach Anspruch 15, wobei die proximale Kante (328b, 328c) der Klemmrippe einen Winkel von etwa 45 Grad mit der Drehachse bildet.

17. Vorrichtung nach Anspruch 6, wobei der Konus eine Auflagescheibe (336) umfasst, die dazu ausgelegt ist, auf dem starren Aufnahmeabschnitt des zusammenklappbaren Kerns aufzuliegen, wenn sich der verformbare Abschnitt in dem expandierten Zustand befindet.

18. Vorrichtung nach Anspruch 1, wobei der zusammenklappbare Kern elektrisch leitfähiges Material umfasst.

19. Vorrichtung nach Anspruch 1, wobei der zusammenklappbare Kern nicht elektrisch leitfähiges Material umfasst.

20. Verfahren zum Befestigen einer Vorrichtung (300) zum Bereitstellen eines Erdungspunkts eines motorisierten Fahrzeugs (1100), wobei die Vorrichtung Folgendes umfasst einen Montageabschnitt (310), der dazu ausgelegt ist, die Vorrichtung an dem motorisierten Fahrzeug zu befestigen und bei Befestigung an dem motorisierten Fahrzeug eine elektrische Erdung für eine oder mehrere elektrische Komponenten des motorisierten Fahrzeugs durch Verbindung mit einem Erdungsanschluss bereitzustellen,
eine Spindel (312), die sich von dem Montageabschnitt entlang einer axialen Länge erstreckt, die eine Drehachse (370) definiert, wobei die Spindel einen Gewindeabschnitt entlang zumindest eines Teils der axialen Länge umfasst, einen zusammenklappbaren Kern (320);
einen Konus (330), der dazu ausgelegt ist, mit dem zusammenklappbaren Kern in Eingriff zu kommen, wobei der Konus ein Durchgangsloch (338) umfasst, das ein Gewinde umfasst, und das Durchgangsloch und das Gewinde dazu ausgelegt sind, gegenseitig mit dem Gewindeabschnitt der Spindel derart in Eingriff zu kommen, dass eine Drehung des Konus um die Drehachse bewirkt, dass sich der Konus durch eine durch den Eingriff des Gewindes des Durchgangslochs mit dem Gewindeabschnitt der Spindel bewirkte Schraubwirkung zu dem Montageabschnitt hin oder von diesem weg bewegt, und wobei der zusammenklappbare Kern einen Durchgangsabschnitt (329), der ermöglicht, dass der zusammenklappbare Kern auf der Spindel montiert wird, und einen verformbaren Abschnitt (324) umfasst, der in einen zusammengeklappten Zustand vorgespannt ist, in dem sich ein Klemmende des zusammenklappbaren Kerns in der Nähe des Montageabschnitts in einer zurückgezogenen Position befindet, und wobei der verformbare Abschnitt dazu ausgelegt ist, durch einen Druck des Eingriffs des Konus mit dem zusammenklappbaren Kern in einen expandierten Zustand überzugehen, der durch die Schraubwirkung bewirkt wird, wenn der Konus um die Drehachse gedreht wird, wodurch eine Bewegung des Konus entlang der Spindel zu dem Montageabschnitt hin durch den gegenseitigen Eingriff des Gewindeabschnitts der Spindel und des Gewindes des Durchgangslochs bewirkt wird, wobei der Konus, der zusammenklappbare Kern und die Spindel dazu ausgelegt sind, einen Erdungsanschluss (800) auf dem Montageabschnitt festzuklemmen, wenn sich der verformbare Abschnitt des zusammenklappbaren Kerns in dem expandierten Zustand befindet, der durch die Wirkung des Schraubens des Konus auf der Spindel zu dem Montageabschnitt hin bewirkt wird, und wobei das Klemmende des verformbaren Abschnitts in dem expandierten Zustand den Erdungsanschluss vonseiten eines Drucks aus der Schraubwirkung gegen den Montageabschnitt drückt, wobei die Spindel und der Konus ein Haltemittel umfassen, das verhindert, dass sich das Gewinde des Durchgangslochs des Konus von dem Gewindeabschnitt der Spindel löst, wobei das Verfahren Folgendes umfasst
Befestigen des Montageabschnitts an dem motorisierten Fahrzeug;
Montieren des Erdungsanschlusses auf dem Montageabschnitt, wenn sich der verformbare Abschnitt in dem zusammengeklappten Zustand befindet;
Drehen des Konus um die Drehachse, um eine Bewegung des Konus durch den gegenseitigen Eingriff des Gewindeabschnitts der Spindel und des Gewindeabschnitts des Durchgangslochs zu dem Montageabschnitt hin zu bewirken, um den Erdungsanschluss auf dem Montageabschnitt festzuklemmen, wenn sich der verformbare Abschnitt in dem expandierten Zustand befindet.

21. Verfahren nach Anspruch 20, wobei das Befestigen des Montageabschnitts an dem motorisierten Fahrzeug Folgendes umfasst
Schweißen oder Nieten des Montageabschnitts an das Fahrzeug;
Beschichten des Fahrzeugs, wenn sich der verformbare Abschnitt in dem expandierten Zustand befindet;
Drehen des Konus um die Drehachse, um eine Bewegung des Konus durch den gegenseitigen Eingriff des Gewindeabschnitts der Spindel und des Gewindeabschnitts des Durchgangslochs von dem Montageabschnitt weg zu bewirken, um den verformbaren Abschnitt von dem expandierten Zustand in den zusammengeklappten Zustand zu überführen.

## Revendications

1. Dispositif (300) pour fournir un point de mise à la terre d'un véhicule motorisé (1100), le dispositif comprenant
une section de montage (310) configurée pour fixer le dispositif au véhicule motorisé et pour fournir, lorsqu'il est fixé au véhicule motorisé, une terre électrique pour un ou plusieurs composants électriques du véhicule motorisé par liaison à une borne de mise à la terre,
une broche (312) s'étendant à partir de la section de montage le long d'une longueur axiale définissant un axe de rotation (370), la broche incluant une section filetée le long d'au moins une partie de la longueur axiale,
un noyau repliable (320) ;
un cône (330) configuré pour venir en prise avec le noyau repliable, le cône incluant un trou traversant (338) qui inclut un filetage et le trou traversant et le filetage étant configurés mutuellement pour venir en prise avec la section filetée de la broche de sorte que la rotation du cône autour de l'axe de rotation amène le cône à se déplacer vers ou à l'écart de la section de montage par une action de vissage causée par la mise en prise du filetage du trou traversant avec la section filetée de la broche, et le noyau repliable inclut une section traversante (329) qui permet au noyau repliable d'être monté sur la broche et une section déformable (324) qui est sollicitée dans un état replié dans lequel une extrémité de serrage du noyau repliable à proximité de la section de montage est dans une position rétractée et la section déformable est configurée pour passer à un état déployé par pression du cône venant en prise avec le noyau repliable causée par l'action de vissage lorsque le cône tourne autour de l'axe de rotation amenant le cône à se déplacer le long de la broche vers la section de montage par la mise en prise mutuelle de la section filetée de la broche et du filetage du trou traversant, le cône, le noyau repliable et la broche étant configurés pour serrer une borne de mise à la terre (800) sur la section de montage lorsque la section déformable du noyau repliable est dans l'état déployé causé par l'action du cône étant vissé sur la broche vers la section de montage et l'extrémité de serrage de la section déformable dans l'état déployé forçant la borne de mise à la terre contre la section de montage par la pression de l'action de vissage, dans lequel la broche et le cône incluent un moyen de retenue empêchant le filetage du trou traversant du cône de se libérer de la section filetée de la broche.

2. Dispositif selon la revendication 1, comprenant la borne de mise à la terre incluant un trou permettant à la borne de mise à la terre d'être montée sur la section de montage du dispositif lorsque la section déformable est dans l'état replié.

3. Dispositif selon la revendication 2, dans lequel la borne électrique est une borne en peigne.

4. Dispositif selon la revendication 1, dans lequel le cône inclut une section de mise en prise (332) s'étendant d'une surface interne du cône vers la broche et le filetage inclus dans le trou traversant du cône est une surface filetée de la section de mise en prise qui fait face à la broche, dans lequel le moyen de retenue inclus dans la broche et le cône empêche le filetage du trou traversant du cône de se libérer de la section filetée de la broche en empêchant la section de mise en prise du cône de se déplacer au-delà du moyen de retenue si le cône est vissé sur la broche à l'écart de la section de montage de telle sorte que la section de mise en prise atteint le moyen de retenue.

5. Dispositif selon la revendication 4, dans lequel la broche inclut une section creuse (321a) configurée pour recevoir un boulon qui fixe une butée à la broche, et la butée fournit le moyen de retenue en empêchant la section de mise en prise du cône de se déplacer au-delà de la butée si le cône est vissé sur la broche à l'écart de la section de montage de telle sorte que la section de mise en prise atteint la butée.

6. Dispositif selon la revendication 1, dans lequel le noyau repliable inclut une section de réception rigide (322) qui définit un diamètre de la section traversante qui permet au noyau repliable d'être monté sur la section de montage, et la section déformable comprend au moins un segment de serrage incluant une patte (326) fixée à la section de réception rigide au niveau d'une extrémité et un pied (328) fixé à l'autre extrémité de la patte comprenant une arête de serrage (328a), le pied étant l'extrémité de serrage de la section déformable, et l'arête de serrage étant plus proche de la broche lorsque la section déformable est dans l'état replié que lorsque le noyau repliable est dans l'état déployé.

7. Dispositif selon la revendication 6, dans lequel l'au moins un segment de serrage est l'une d'une pluralité de segments de serrage de la section déformable, chacun incluant une patte fixée à la section de réception rigide au niveau d'une extrémité et un pied fixé à l'autre extrémité de la patte comprenant une arête de serrage, chacun de la pluralité de segments de serrage étant séparé par un espacement (327), chacun des pieds étant l'extrémité de serrage de la section déformable, et les arêtes de serrage étant chacune plus proche de la broche lorsque la section déformable est dans l'état replié que lorsque le noyau repliable est dans l'état déployé.

8. Dispositif selon la revendication 1, incluant au moins une cheville de positionnement de noyau (316) située dans l'un des espacements séparant les segments de serrage pour empêcher la rotation du noyau repliable lorsque le cône est vissé sur la broche.

9. Dispositif selon la revendication 1, incluant au moins une cheville de positionnement de borne (314) située dans un espacement de réception de cheville (840) de la borne de mise à la terre pour empêcher la rotation de la borne de mise à la terre lorsque le cône est vissé sur la broche.

10. Dispositif selon la revendication 6, dans lequel la section de montage comprend une partie de base (317) pour fixer la section de montage au véhicule motorisé, au moins une marche (313) s'étendant à partir d'une surface supérieure de la partie de base sur laquelle la borne de mise à la terre doit être serrée, une plateforme (311) s'étendant à partir de la surface supérieure de la partie de base, la plateforme ayant une hauteur au-dessus de la partie de base supérieure à l'au moins une marche, dans lequel les arêtes de serrage sont configurées pour serrer la borne de mise à la terre à l'au moins une marche de la section de montage lorsque la section déformable est dans l'étant déployé et les arêtes de serrage reposent sur la plateforme lorsque la section déformable est dans l'état replié.

11. Dispositif selon la revendication 1, dans lequel la partie de base est configurée pour fixer la section de montage à la carrosserie du véhicule en soudant la partie de base à la carrosserie du véhicule.

12. Dispositif selon la revendication 1, dans lequel une partie de tête (315) de la section de montage s'étend à partir de la surface inférieure de la partie de base et la partie de base est configurée pour fixer la section de montage à la carrosserie du véhicule motorisé en utilisant la partie de base et la partie de tête pour riveter le dispositif au véhicule.

13. Dispositif selon la revendication 1, dans lequel le cône comprend un écrou (340), et le cône est configuré pour être vissé sur la broche en appliquant un couple à l'écrou.

14. Dispositif selon la revendication 6, dans lequel l'arête de serrage comprend un bord à proximité de la broche qui est sensiblement parallèle à la patte.

15. Dispositif selon la revendication 6, dans lequel l'arête de serrage comprend un bord (328b, 328c) à proximité de la broche qui est incliné par rapport à la patte pour former un angle compris entre 0 et 90 degrés.

16. Dispositif selon la revendication 15, dans lequel le bord proximal (328b, 328c) de l'arête de serrage forme un angle d'approximativement 45 degrés avec l'axe de rotation.

17. Dispositif selon la revendication 6, dans lequel le cône comprend un disque de repos (336) qui est configuré pour reposer sur la section de réception rigide du noyau repliable lorsque la section déformable est dans l'état déployé.

18. Dispositif selon la revendication 1, dans lequel le noyau repliable comprend un matériau électroconducteur.

19. Dispositif selon la revendication 1, dans lequel le noyau repliable comprend un matériau non électroconducteur.

20. Procédé pour fixer un dispositif (300) pour fournir un point de mise à la terre d'un véhicule motorisé (1100), le dispositif comprenant
une section de montage (310) configurée pour fixer le dispositif au véhicule motorisé et pour fournir, lorsqu'il est fixé au véhicule motorisé, une terre électrique pour un ou plusieurs composants électriques du véhicule motorisé par liaison à une borne de mise à la terre,
une broche (312) s'étendant à partir de la section de montage le long d'une longueur axiale définissant un axe de rotation (370), la broche incluant une section filetée le long d'au moins une partie de la longueur axiale,
un noyau repliable (320) ;
un cône (330) configuré pour venir en prise avec le noyau repliable, le cône incluant un trou traversant (338) qui inclut un filetage et le trou traversant et le filetage étant configurés mutuellement pour venir en prise avec la section filetée de la broche de sorte que la rotation du cône autour de l'axe de rotation amène le cône à se déplacer vers ou à l'écart de la section de montage par une action de vissage causée par la mise en prise du filetage du trou traversant avec la section filetée de la broche, et le noyau repliable inclut une section traversante (329) qui permet au noyau repliable d'être monté sur la broche et une section déformable (324) qui est sollicitée dans un état replié dans lequel une extrémité de serrage du noyau repliable à proximité de la section de montage est dans une position rétractée et la section déformable est configurée pour passer à un état déployé par pression du cône venant en prise avec le noyau repliable causée par l'action de vissage lorsque le cône tourne autour de l'axe de rotation amenant le cône à se déplacer le long de la broche vers la section de montage par la mise en prise mutuelle de la section filetée de la broche et du filetage du trou traversant, le cône, le noyau repliable et la broche étant configurés pour serrer une borne de mise à la terre (800) sur la section de montage lorsque la section déformable du noyau repliable est dans l'état déployé causé par l'action du cône étant vissé sur la broche vers la section de montage et l'extrémité de serrage de la section déformable dans l'état déployé forçant la borne de mise à la terre contre la section de montage par la pression de l'action de vissage, dans lequel la broche et le cône incluent un moyen de retenue empêchant le filetage du trou traversant du cône de se libérer de la section filetée de la broche, le procédé comprenant
la fixation de la section de montage au véhicule motorisé ;
le montage de la borne de mise à la terre sur la section de montage lorsque la section déformable est dans l'état replié ;
la rotation du cône autour de l'axe de rotation pour amener le cône à se déplacer vers la section de montage par la mise en prise mutuelle de la section filetée de la broche et de la section filetée du trou traversant pour serrer la borne de mise à la terre sur la section de montage lorsque la section déformable est dans l'état déployé.

21. Procédé selon la revendication 20, dans lequel la fixation de la section de montage au véhicule motorisé comprend
le soudage ou le rivetage de la section de montage au véhicule ;
le revêtement du véhicule lorsque la section déformable est dans l'état déployé ;
la rotation du cône autour de l'axe de rotation pour amener le cône à se déplacer à l'écart de la section de montage par la mise en prise mutuelle de la section filetée de la broche et de la section filetée du trou traversant pour faire passer la section déformable de l'état déployé à l'état replié.
